# EUROPEAN PATENT SPECIFICATION

(11) **EP 0 832 941 B1**
(45) Date of publication and mention of the grant of the patent: **31.07.2002**
(21) Application number: 97307501.3
(22) Date of filing: 25.09.1997
(51) Int. Cl.: C09B 67/50, C09B 67/00, G03G 5/06

(54) **Process for the preparation of type I titanyl phthalocyanine having enhanced photoconductivity**
Herstellprozess für Typ I Titanylphthalocyanin mit verbesserter Photoleitfähigkeit
Procédé pour la préparation de titanylphthalocyanine du type I ayant une photoconductivité améliorée

(30) Priority: 25.09.1996 US 719024
(43) Date of publication of application: 01.04.1998
(73) Proprietor: LEXMARK INTERNATIONAL, INC., Lexington, Kentucky 40511-1876 (US)
(72) Inventor: Fuller, Sterritt, Ray, Jr., Boulder, Colorado 80503 (US); Neely, Jennifer Kaye, 204G, Arvada, Colorado 80003 (US); Levin, Ronald Harold, Boulder, Colorado 80003 (US)
(74) Representative: Matthews, Derek Peter

(56) References cited:
- EP-A- 0 221 466
- DE-A- 19 505 784
- FR-A- 976 055
- GB-A- 2 275 687
- US-A- 3 051 718
- US-A- 4 777 251
- US-A- 5 189 156
- DATABASE WPI Section Ch, Week 7707 Derwent Publications Ltd., London, GB; Class E23, AN 77-12057Y XP002051237 & JP 52 000 935 A (PENTEL KK) , 6 January 1977

## Description

### Technical Field

This invention relates to titanyl phthalocyanine used in a photoconductor, and, more specifically, to a process which improves the speed of response of photoconductors using Type I titanyl phthalocyanine.

### Background of the Invention

Both patent and journal literature contain many references to methods for preparing polymorphs of titanyl phthalocyanine. Some of the polymorphs are known to have significant response to light and can be used to advantage in photoconductor formulations, and other of the polymorphs are known not to be significantly photoconductive. Typically, these polymorphs are identified and differentiated from one another on the basis of their x-ray diffraction powder patterns (XRD patterns), a method widely used for such characterizations.

New polymorphs with significant photogenerating capabilities would be of technical interest and economic value for use in photoconductors in imaging applications. Various imaging applications call for different characteristics. For printing images which are either black or white, very fast discharge speeds are desirable, while more moderate speeds permit accurate rendition of shades of gray which may be required in some applications.

The methods to create such different polymorphs typically involve grinding or solvent treatments or both. U.S. Patent No. 5,153,094 to Kazmaier et al describes such methods. This patent is one of several patents which disclose a process which creates a new and active polymorph of titanyl phthalocyanine through the specific use of a trihaloacetic acid in combination with other solvents. U.S. patent No. 5, 194,354 to Takai et al describes the liquid procedures for forming of titanyl phthalocyanine, but none employing a haloacetic acid.

This invention by contrast employs dihaloacetic acid treatment of titanyl phthalocyanine. U.S. Patent No. 3,051,718 to Wheeler discloses a dichloroacetic acid used for acid swelling of copper or metal free phthalocyanine. U.S. Patent No. 4,298,526 to Sappok et al mentions mono and dichloroacetic acid used in milling phthalocyanine pigment, but not titanyl phthalocyanine.

Proceedings of ISPT's Eleventh International Congress on Advances in Non-Impact Printing Technologies, Martin et al, page 30, 1995 describe methods for producing enhanced sensitivity in Type I polymorphs, but those methods require an additional step; namely conversion of Type I material into Type IV material prior to regeneration of the improved Type I material. The extra step is not required by the present invention, and consumes extra time and resources without producing any extra advantage.

GB-A-2275687 also describes a multi-step method of producing Type I polymorphs. In this method, precursor Type I polymorph is dissolved in a trihaloacetic acid solution, precipitated to give Type X and then converted to Type I via Type IV.

### Disclosure of the Invention

This invention employs solution treatment with dihaloacetic acid of Type I titanyl phthalocyanine to achieve a significantly more photoactive Type I titanyl phthalocyanine. The phthalocyanine is treated with a mixture of methylene chloride and a dihaloacetic acid. The Type I phthalocyanine is then recovered by addition to a water and methanol solution. The collected material is then washed and dried. The photoactivity of the material is greatly improved.

A photoconductor in which the foregoing phthalocyanine is suspended in a resin binder as a charge generation layer exhibits improved sensitivity and may be employed with a wide range of known charge transport layers.

### Best Mode for Carrying Out the Invention

Improved photoactivity is obtained by starting with standard Type I polymorph of titanyl phthalocyanine and forming a mixture with dichloro- or difluoroacetic acid in methylene chloride in a ratio by volume of one part acid to four parts methylene chloride (i.e., CHX₂CO₂H/CH₂CL₂ at 1:4; X=Cl, F). This mixture is then added to a solution of equal parts by volume methanol and water (i.e., CH₃OH/H₂) at 1:1). The recovered Type I phthalocyanine is then washed with water followed by methanol. The XRD pattern of the recovered solid is indistinguishable from the starting Type I polymorph. However, a graph of voltage versus exposure energy shows a much faster response, with the recovered Type I phthalocyanine characteristics quite similar for both the dichloro and the difluoro acid treatments.

The difluoroacetic acid liquid (termed "pasting") procedure used to prepare this polymorph with enhanced photoactivity follows; the procedure using dichloroacetic acid is completely directly analogous.

### Difluoroacetic Acid Pasting Procedure

### Scale

20 g synthetic 0=Ti[pc]
160 ml CH₂Cl₂
40 ml difluoroacetic acid
1000 ml MeOH
1000 ml deionized water

### Procedure

1. The pigment was treated with the solution of CH₂Cl₂ and difluoroacetic acid.
2. The above mixture was dropped via a dropping funnel into the stirring solution of water and methanol.
3. Once the addition of the foregoing mixture of O=Ti[pc] in methylene chloride and difluoracetic acid was completed, the resulting mixture was centrifuged at a setting of 3400 rpm for 10 minutes.
4. The supernatant remaining after centrifuging was poured off, the pigment was washed from the centrifuge tubes with water, and the water/pigment mixture was allowed tostir for approximately 10 minutes. This completes one washing with water.
5. The O=Ti[pc] was washed with water six times or until the supernatant pH was neutral.
6. One final washing was completed with methanol.
7. The O=Ti[pc] was allowed to dry in the vacuum oven.

The new polymorphs may be dispersed with polyvinylbutyral resin in a ratio by weight of two parts polymorph to one part resin (i.e., TiO[pc]/PVB = 2:1) and this formulation is coated on a standard anodized aluminum conductive drum as conventional in making photoconductor drums. Then an active transport layer is coated on the TiO[pc]/PVB layer. The resulting coated drum is useful as a photoconductive imaging member. High photosensitivity accompanied by low dark decay occurs when the device is employed with a standard gallium arsenide laser. Specifically, in terms of voltage charge of the material and microjoules per square centimeter discharge: At 0 discharge, the standard was at about -850 volts and the new was at about -790 for the difluoro and about -760 for the dichloro; at 0.5 the standard was at about -700 and the new were at about -550; at 1 the standard was at about - 640 and the new were at about -470; at 1.5 the standard was at about -620 and the two new were at about -440; and at 2 the standard was at about - 610 and the new was about -420 for the difluoro and about -410 for the dichloro. Intermediate values appeared generally consistent with the foregoing values. Accordingly, a significantly larger discharge is experienced from the new polymorphs over the standard Type I polymorph.

A variety of polymers in addition to polyvinylbutyral are suitable for use in the charge generating layer. The transport layer is composed of a transport molecule such as a triarylamine, a hydrazone, a benzidine and other such materials dissolved in a solvent along with a polymer binder such as a polycarbonate, a polyester or other such materials.

Although pasting with trihaloacetic acid is known, as shown in the foregoing patent to Kazmaier, this has been considered quite specific. Entirely analogous pasting with pentafluoropropionic acid resulted in production of a different polymorph with minimal photoactivity and very different XRD pattern.

## Claims

1. A process for the preparation of Type I polymorph of titanyl phthalocyanine having improved photoconductive properties, said process comprising forming a mixture of Type I titanyl phthalocyanine with a solution of methylene chloride and a dihaloacetic acid, recovering said phthalocyanine by combining said mixture with a solution of water and alcohol, and washing said recovered phthalocyanine.

2. The process as in claim 1 in which said solution is by volume one part of said acid and four parts of said methylene chloride.

3. The process as in claim 2 in which said alcohol is methanol and said solution is equal parts by volume of said water and said methanol.

4. The process as in any of claims 1 to 3 in which said acid is difluoroacetic acid.

5. The process as in any of claims 1 to 3 in which said acid is dichloroacetic acid.

6. A process as claimed in any of claims 1 to 5 further comprising forming a dispersion of said Type 1 polymorph of titanyl phthalocyanine in a binder resin and coating said dispersion on to a conductive substrate to form a photoconductor.

## Patentansprüche

1. Verfahren zur Herstellung des Polymorphietyps I von Titanylphthalocyanin mit verbesserten photoleitenden Eigenschaften, wobei das Verfahren die Bildung einer Mischung des Typs I von Titanylphthalocyanin mit einer Lösung von Methylenchlorid und einer Dihalogenessigsäure, die Gewinnung des genannten Phthalocyanins durch Vereinigen der genannten Mischung mit einer Lösung von Wasser und Alkohol und das Waschen des gewonnenen Phthalocyanins umfaßt.

2. Verfahren nach Anspruch 1, bei dem die genannte Lösung aus einem Volumenteil der genannten Säure und vier Volumenteilen des genannten Methylenchlorids besteht.

3. Verfahren nach Anspruch 2, bei dem der genannte Alkohol Methanol ist und die genannte Lösung aus gleichen Volumenteilen des genannten Wassers und des genannten Methanols besteht.

4. Verfahren nach irgendeinem der Ansprüche 1 bis 3, bei dem die genannte Säure Difluoressigsäure ist.

5. Verfahren nach irgendeinem der Ansprüche 1 bis 3, bei dem die genannte Säure Dichloressigsäure ist.

6. Verfahren nach irgendeinem der Ansprüche 1 bis 5, das ferner die Bildung einer Dispersion des genannten Polymorphietyps 1 von Titanylphthalocyanin in einem Binderharz und die Beschichtung eines leitenden Substrats mit der genannten Dispersion umfaßt, um einen Photoleiter zu bilden.

## Revendications

1. Procédé pour la préparation de polymorphe de Type I de titanyl phtalocyanine ayant des propriétés photoconductrices améliorées, ledit procédé comprenant la formation d'un mélange de titanyl phtalocyanine de Type I avec une solution de chlorure de méthylène et d'un acide dihaloacétique, la récupération de ladite phtalocyanine par combinaison dudit mélange avec une solution d'eau et d'alcool, et le lavage de ladite phtalocyanine récupérée.

2. Procédé suivant la revendication 1, dans lequel ladite solution comprend en volume une partie dudit acide et quatre parties dudit chlorure de méthylène.

3. Procédé suivant la revendication 2, dans lequel ledit alcool est le méthanol et ladite solution est constituée de parties égales en volume de ladite eau et dudit méthanol.

4. Procédé suivant l'une quelconque des revendications 1 à 3, dans lequel ledit acide est l'acide difluoroacétique.

5. Procédé suivant l'une quelconque des revendications 1 à 3, dans lequel ledit acide est l'acide dichloroacétique.

6. Procédé suivant l'une quelconque des revendications 1 à 5, comprenant de plus la formation d'une dispersion dudit polymorphe de Type I de titanyl phtalocyanine dans une résine de liaison et l'enduction de ladite dispersion sur un substrat conducteur pour former un photoconducteur.
